# EUROPEAN PATENT SPECIFICATION

(11) **EP 4 096 796 B1**
(45) Date of publication and mention of the grant of the patent: **25.06.2025**
(21) Application number: 21704895.8
(22) Date of filing: 29.01.2021
(51) Int. Cl.: A62B 35/00

(54) **LANYARD ASSEMBLY**
TRAGEBANDANORDNUNG
ENSEMBLE CORDON

(30) Priority: 31.01.2020 GB 202001354
(43) Date of publication of application: 07.12.2022
(73) Proprietor: Treemagineers Ltd., Pitlochry PH17 2QH (GB)
(72) Inventor: COWELL, Christopher, Pitlochry PH18 5TP (GB); TANNER, Elliot, Montgomery SY15 6DZ (GB)
(74) Representative: Geary, Stephen
(86) International application number: PCT/GB2021/050208
(87) International publication number: WO 2021/152321

(56) References cited:
- JP-A- 2017 080 364
- US-A1- 2017 211 661
- US-B1- 6 752 242
- : ALSOLU: "POTELET POINT D'ANCRAGE ALU TUBE CARRÉ", 17 May 2018 (2018-05-17), XP055495631, Retrieved from the Internet <URL:http://extranet.alsolu.com/documents/1-fiches-techniques/FRA-VECTASAFE-Potelet-point-d-ancrage-ALU-tube-carre-FP-20180517.pdf> [retrieved on 20180726]

## Description

This invention relates to a lanyard system.

Arborists and other people working at height use a lanyard system to attach themselves to a tree stem or pole to permit precise positioning of their body. Such a lanyard system is separate to the working line or safety line for fall protection; it may be for positioning or for providing the main support of a user's body weight. Lanyards are often used during chainsaw cuts of a main tree stem to afford a user extra stability or better positioning.

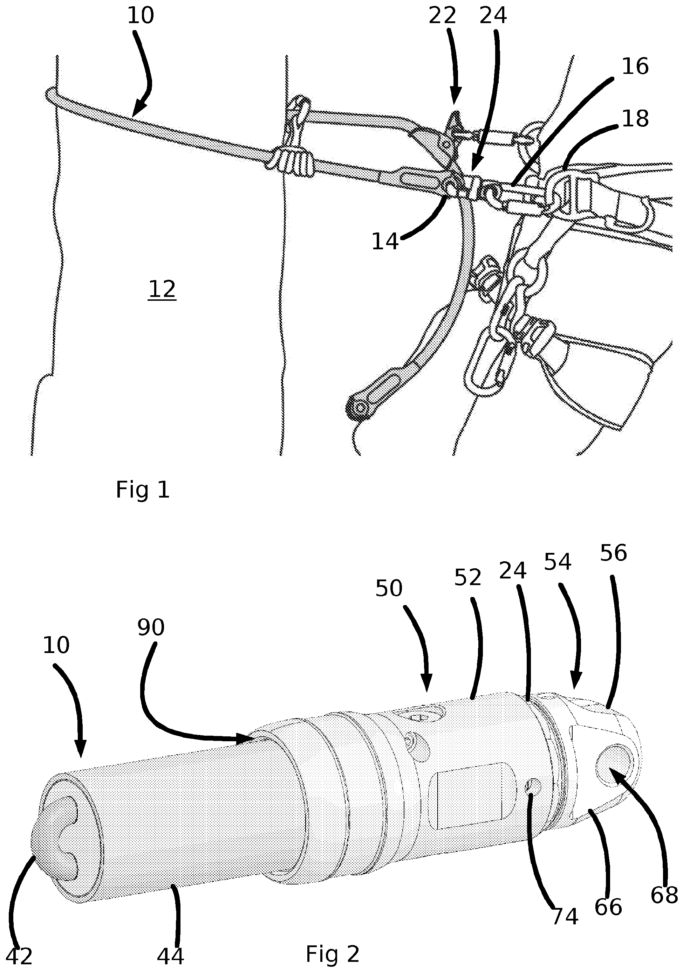

A typical lanyard in use by an arborist is shown in Figure 1. In Figure 1, a lanyard 10 passes around a tree trunk 12 to allow the user to maintain position relative to the tree trunk 12, for example while making a chainsaw cut The lanyard 10 passes around the trunk 12 and has a terminating eye 14 that attaches by way of a connector 16 to side attachment arrangements 18 on opposite sides of the user's harness. The lanyard 10 can be adjusted in length with a rope adjusting device 22 to accommodate trees of various sizes and the user's preferred working position. If forward attachment arrangements are present on the harness, a lanyard may additionally or alternatively be installed there. The lanyard 10 can be moved up or down the trunk 12 by the user reducing load on it and throwing or flipping it in the desired direction.

A swivel element 24 is added to one or both ends of a lanyard 10 to reduce torque build up during this procedure; this is particularly beneficial for those lanyards that are stiffer or contain metallic elements such as wire core lanyards. The swivel element 24 may be incorporated within the termination connector or as a separate swivel component to which a standard, non-swivel connector (such as a carabiner) is attached.

Lanyards are generally constructed of textile load bearing elements and cut-resistant products are available with a steel cable or wire rope core. Although this eliminates the prospect of a hand saw cutting through the lanyard and increases its resistance to cutting by motorised saws, it is still possible to cut through the core with relative ease when using a large chainsaw. A chain lanyard provides a much more cut-resistant option and provides an estimated 10-fold increase in cut resistance.

The problem of how to create a chain lanyard with a smooth external surface that can be used with a rope adjustment device has been addressed elsewhere. However, effective termination of such lanyards has not hitherto been provided, and it is an aim of this invention to provide such termination.

US 2017/211661 discloses a high-strength swivel device for transferring axial tension load while avoiding transfer of side loads may comprise a swivel chain connector. The swivel device is disclosed for use with an open link chain.

JP2017080364A discloses harnesses for arborism. The double harnesses include a safety work belt that comprises lanyard portions terminated by connecting eyes.

US6752242 discloses a wood pole fall protection device for linemen and pole climbers. The device the line technician with the ability to rotate or twist in the straps as well as negotiate and manoeuvre around obstacles and obstructions encountered upon the pole.

To this end, from a first aspect, this invention provides a lanyard assembly as set forth in claim 1.

This arrangement provides a secure and versatile termination for a lanyard that has a chain as its tensile element.

Typically, at least part of the second link is received within the chain recess. In a preferred embodiment, the chain recess has first and second extents within which the second link and the end link respectively are received.

The connector element may be integral with the terminator body. In other embodiments, the terminator further includes a separate terminator component connected to the terminator body. The terminator body includes a threaded recess into which the connector element can be directly or indirectly threaded. Advantageously, the connector element is connected to the terminator body by a swivel which typically allows free or controlled rotation between the lanyard and a component connected to the terminator body. It is preferable that the connection between the connector element and the terminator body is independent of the connection between the chain and the terminator body; that is, either of the connector element and the chain can be disconnected from the terminator body independently of the other. This provides versatility in construction and maintenance of embodiments of the invention.

The extents of the chain recess are preferably shaped and dimensioned to minimise linear or rotational movement of the links received within them, such that the installed chain links make contact with or are very closely spaced from the material of the terminator body surrounding the chain recess. The entire length of the end link may be received within the second extent of the chain recess. Approximately half the length of the second link may be received within the first extent of the chain recess.

In typical embodiments of the invention, the chain includes a cover for its links, at least the end link projecting from the cover. Most preferably, an end portion of the cover is received within the lanyard recess to protect it from damage. Preferably, an end surface of the cover closely approaches or abuts the floor of the lanyard recess.

From a second aspect, this invention provides apparatus for use by a person working at height comprising a harness and a lanyard assembly embodying the first aspect of the invention, the terminator being connected to a hardware component being an attachment point of the harness.

The lanyard assembly may in addition be connected to a further hardware component of the harness through a second terminator and/or through a length adjuster.

Although the use of a lanyard assembly embodying the invention may commonly find application in an arborist's lanyard, it could also find application where the weight and stiffness of chain are not overly negative features and where increased cut and abrasion resistance are important. Examples include a fall protection connecting link from a harness to a working line during cutting, power washing, sand blasting operations etc. Such a link might be installed as an additional safety element when carrying out high-risk operations and might span a high-risk part of a work zone, from the harness to well above the position of the work positioning devices. As such, it would act as a backup in case the normal work position lines were damaged. It could also find application as a sliding bridge on a fall-protection harness, which find common, but not exclusive, application in the tree care industry.

Embodiments of the invention will now be described in detail, by way of example, and with reference to the accompanying drawings, in which
Figure 1 shows a lanyard system in use, and has already been discussed;
Figure 2 and 3 show an end portion of a lanyard embodying the invention, including a terminator;
Figures 4 and 5 are exploded and cross-sectional views of the end portion of Figure 2;
Figure 6 is an enlarged cross-section of part of the terminator of Figure 2
Figure 7 shows an anchoring body of the terminator of Figure 2;
Figure 8 shows an embodiment of the invention in which the terminator incorporates a carabiner body connected directly to a swivel component;
Figure 9 shows an embodiment of the invention in which the terminator incorporates a carabiner connected through a shackle to a swivel component;
Figure 10 shows an embodiment of the invention in which the terminator incorporates a swivel eye;
Figure 11 shows an embodiment of the invention in which the terminator incorporates a stopper end;
Figure 12 shows an embodiment of the invention in which the terminator incorporates a shackle; and
Figure 13 shows an embodiment of the invention in which the terminator incorporates a fixed eye.

With reference to the drawings, a first embodiment of this invention provides a lanyard 10 that can be used in a lanyard system described with reference to Figure 1.

In this embodiment, the lanyard 10 includes an elongate, flexible composite line 40 that includes a chain of interconnected links 42 surrounded by a multi-layer cover 44. Such a line 40 provides a smooth outer surface, comparable with that of a conventional flexible lanyard (and is therefore, compatible with rope adjusters and other hardware) while providing the strength and cut-resistance of a metal chain.

A terminator 50 is provided at one or both ends of the line 40. In this embodiment, the terminator includes a terminator body 52 and a swivel 54.

In this embodiment, the swivel 54 is formed in accordance with the disclosures of EP-A-3 088 769 and EP-A-3 323 474, the contents of which are incorporated herein by reference. The swivel 54 includes a boss component 56, a cap 58, a main axle 60 and a bearing 62. The main axle 60 has a threaded shaft which is fixed within a threaded bore of the boss component 56 and a head which bears against the bearing 62 to connect the cap 58 to the boss component 56 such that the cap 58 can pivot about a pivot axis A with respect to the boss component 56. The cap 58 includes a projecting, externally-threaded tubular portion 64 that is centred about the pivot axis. The boss component 56 has an attachment portion having flat, parallel, opposite-facing mating surfaces 66 each of which extends in a respective plane parallel to the pivot axis A and an attachment bore 68 that extends through the boss component 56 between the mating surfaces 66.

The terminator body 52 is a generally cylindrical metal component having a cylindrical outer surface that extends about a central axis. A first axial recess 72 extends axially into the terminator body and is formed with an internal thread. A tapped hole 74 extends radially through the terminator body 52, opening into the first axial recess 72. The tubular portion 64 of the cap 58 of the swivel 54 is threaded into the first axial recess 72 and is retained there by a locking screw (not shown) that is inserted into the tapped hole 74 and tightened into contact with the tubular portion 64 of the cap 58. When assembled in this way, the central axis of the terminator body 52 and the pivot axis A of the swivel are the same, and the terminator body 52 can rotate with respect to the boss component 56 of the swivel 54 about that axis. It will be seen that the swivel 54 is a self-contained assembly which can be installed on and removed from the terminator body 52 without disassembly of the swivel.

The terminator body 52 has a second recess 90 (referred to as the "lanyard recess") that extends into it, extending coaxially towards, but not intersecting with, the first recess 72. The lanyard recess 90 has a transverse floor that extends radially into it A chain recess 94 is formed into the floor, the chain recess 94 having first and second extent of 96, 98, each of which is shaped as a rounded rectangle with parallel long faces and opposed, arcuate short faces, each of which curves about an angle of 180°, the extents 96, 98 intersecting one another at right angles to form a cruciform opening in the floor. The first extent 96 has a depth that is approximately half that of the second extent 98. A lock bolt bore 100 extends radially from the outer surface of the terminator body 52 to pass transversely through the second extent 98 of the chain recess 94 at a depth greater than that of the first extent 96. One end portion of the lock bolt bore 100 is hexagonally shaped and the other end portion is counterbored.

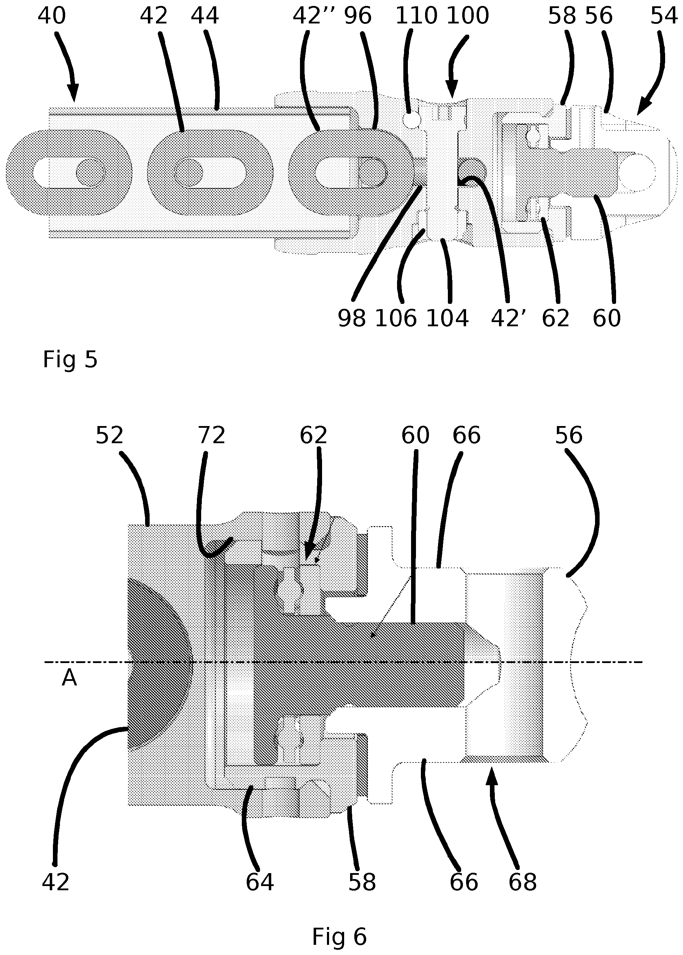

The shape and dimensions of the chain recess 94 are determined by the links 42 of the chain. The second extent 98 is of depth substantially equal to the length of a link 42, while the first extent 96 has a depth approximately half the length of a link 42. Curved surfaces of the chain recess 94 are dimensioned to correspond with curved surfaces of the links 42. As can be seen most clearly in Figure 5, this means that an end link 42' of the chain can be completely enclosed within the second extent 98 of the chain recess 94, while the immediately adjacent link 42" is half enclosed by the first extent 96, outer surfaces of the links 42', 42" being closely adjacent to side walls of the chain recess 94.

The end link 42' is retained within the recess by a lock bolt 104 installed into the lock bolt bore 100 with its head within the counterbore. The lock bolt 104 is retained by a lock nut 106 within the hexagonally-shaped portion of the lock bolt bore 100. A locking screw 110 located within a bore 112 makes contact with the head of the lock bolt 104 to prevent removal of the bolt even in the absence of the lock nut 106. The position of the lock bolt bore 100 is chosen such that it intersects the chain recess 98 at an axial position whereby the shaft of the lock bolt 104 is immediately adjacent to an inner surface of the end link 42', thereby trapping the end link 42' between the shaft and the innermost curved surface of the second extent 98 of the chain recess 94. This prevents (or at least significantly restricts) both axial and rotational movement of the chain with respect to the terminator body 52.

It will be seen that this arrangement for securing the chain within the terminator body 52 is independent of the arrangement for securing the swivel 42 to the terminator body 52. Thus, the swivel 42 and the chain can be connected to or disconnected from the terminator body 52 independently of one another.

The cover 44 is omitted from a free end portion of the lanyard 10 approximately equal in length to 1.5 times the length of the links 42. This ensures that a free end surface of the cover 44 closely approaches or abuts the floor of the lanyard recess 90, and that an end portion of the cover 44 is surrounded by material of the terminator body 52. The diameter of the lanyard recess 90 is selected such that the cover 44 is a close fit within it. This has the effect of providing a nearly smooth outer surface that extends from the cover 44 to the outer surface of the terminator body 52.

A wide variety of cooperating components can be connected to the boss component 56 of the swivel 54 in this embodiment. Such cooperating components may include a yoke formation that is constituted by a U-shaped region which defines a space between two generally parallel legs, the legs having parallel, facing bearing surfaces through each of which a respective coaxial axle bore is formed. Some cooperating components are shown in the disclosure of EP-A-3 323 474.

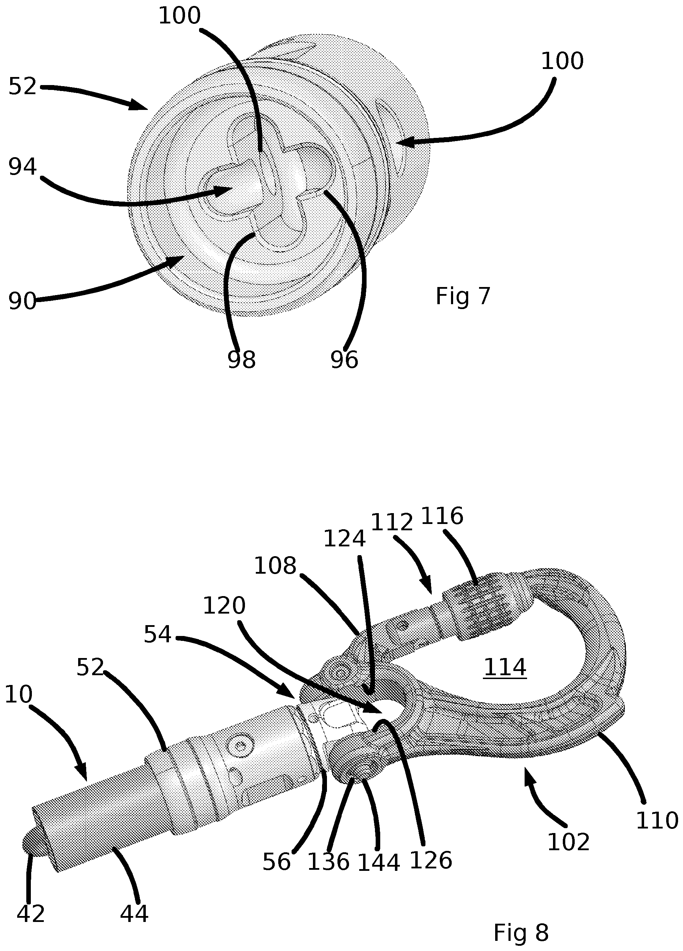

For example, in Figure 8, the cooperating component functions as a screwgate carabiner that can be used to connect the lanyard assembly to another item, such as hardware components of a harness. As with a standard carabiner, the cooperating component includes a body 102 that is very approximately C-shaped, with an opening. A gate 112 is carried on the body 102, which can be pivoted between a closed position (towards which it is biased by a spring), in which it closes the opening, and an open position in which an object can be passed through the opening into or out of a space 114 within the body 102. The gate 112 includes a threaded locking barrel 116 that prevents movement of the gate 112 from the closed position until it is operated by a user.

The body 102 further includes a yoke formation, indicated generally at 120. The yoke formation 120 comprises a U-shaped region that is open to the outside of the body 102. The U-shaped region defines a space between two generally parallel legs 124, 126. End portions of the legs 124, 126 are formed with parallel, mutually facing bearing surfaces that lie adjacent to the mating surfaces 66 of the boss component 56. A back portion 110 of the body 102 extends from yoke formation 120, to an end portion that defines a first limit of the opening. A spur 108 extends from one of the parallel legs 124, extending to an end portion that defines a second limit of the opening. In this embodiment, the gate 112 is pivotally connected to the spur 108 and can close against a nose formed on the back 110.

A respective axle bore is formed through each of the legs 124, 126, the bores being coaxial, lying on a component axis, and perpendicular to the bearing surfaces. An outer part 136 (that is, a part that is remote from the second leg 126) of the axle bore in the first leg 124 is counterbored. An outer part of the axle bore in the second leg 126 has a hexagonal cross-section. The inner portion of each bore is of circular section and of lesser diameter than the outer portions. A tapped transverse bore extends into the first leg 124 and has a counterbored section adjacent to its opening. The transverse bore intersects with the counterbored portion of the axle bore, with the axis of the transverse bore extending adjacent to the counterbored portion.

The yoke component further includes an axle bolt 144. The axle bolt 144 has a head with a recess for receiving a drive bit. A circumferential concave arcuate groove extends around an outside peripheral wall of the head. A shank extends from the head and terminates in an externally threaded section remote from the head. The threaded section is of smaller diameter than the shank such that a shoulder is formed between the threaded section and the shank.

To assemble the yoke component to the condition shown in Figure 8, the mating surfaces 66 of the boss component 56 are placed between the bearing surfaces of the first and second legs 124, 126 such that the attachment bore 68 is in alignment with the axle bores. A self-locking nut is placed into the outer part 136 of the axle bore in the second leg 126. The nut is selected to have a close fit within the bore such that its rotation within the bore is substantially prevented and to have a thread that corresponds to that of the axle bolt 144. The axle bolt 144 is then inserted, threaded section first, through the axle bore in the first leg 124 and the attachment bore 68 of the boss component 56, and the threaded section is screwed into the nut and tightened such that the nut abuts the shoulder of the axle bolt and the head is received within the counterbored portion of the axle bore, in which it is a close fit. A cap screw is then screwed into the transverse bore, where it may be secured by thread locking compound, such that its head is received within the counterbored section of the transverse bore. The shank of the cap screw passes along a section of the concave groove of the head of the axle bolt 144 to lock the axle bolt 144 against removal from the axle bore.

In the assembly of Figure 8, the lanyard 10 can rotate freely with respect to the carabiner body 102 about the pivot axis of the swivel 54. Additionally, the carabiner body 102 can pivot with respect to the lanyard 10 about a transverse pivot axis centred on the axle bolt 144.

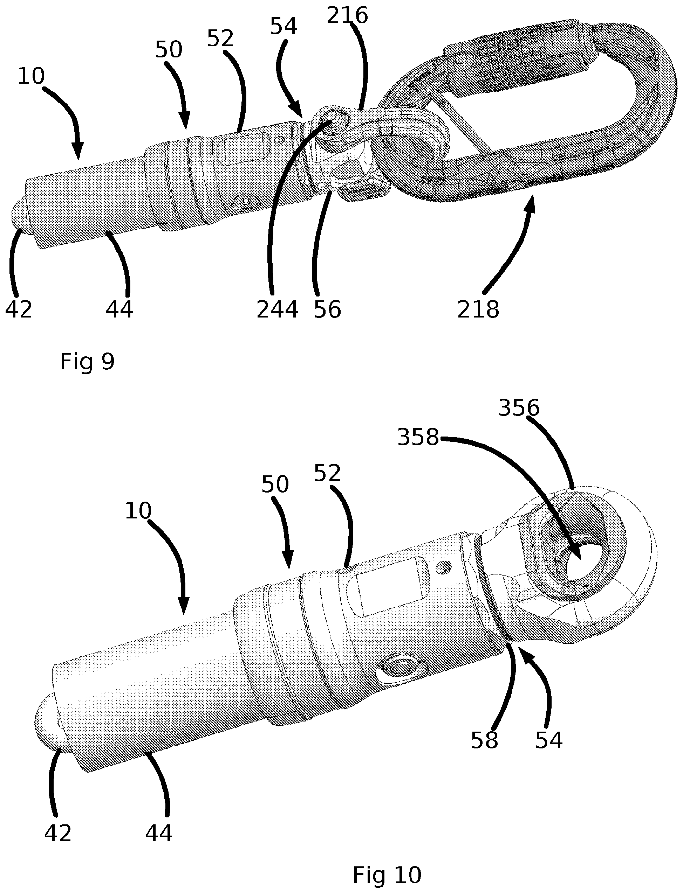

In the assembly of Figure 9, a shackle 216 is connected, as a cooperating component, to the boss component 56 of the swivel 54. The shackle 216 that also has the bearing surfaces, an axle bolt 244 and axle bore that allow it to function as a yoke, and this is connected to the boss component 56 of the swivel 54. The shackle 216 can act as a component to allow connection of other pieces of equipment to the swivel 54. In this example, a captive bar carabiner 218 is connected to the shackle 216, but the skilled person will appreciate that many other connectors or other components could be connected to the shackle 216. In the assembly of Figure 9, the lanyard 10 can rotate freely about the pivot axis of the swivel 54 with respect to the shackle 216 and to any component connected to it. Additionally, the shackle 216 can also pivot with respect to the lanyard 10 about a transverse pivot axis centred on the axle bolt 244.

The embodiment of Figure 10 is a further modification of the embodiment of Figure 8. The boss component 56 of the swivel 54 in Figure 8 is replaced by an eye 356. As in the case of the boss component 56, the eye 356 has a threaded internal bore to receive and retain the main axle 60 whereby it can pivot with respect to the terminator body 52. Instead of the mating surfaces, the eye 356 has a through-hole 358 through which a line or connector can be passed to secure the lanyard 10. The swivel 54 permits free rotation of the lanyard 10 with respect to the eye 356.

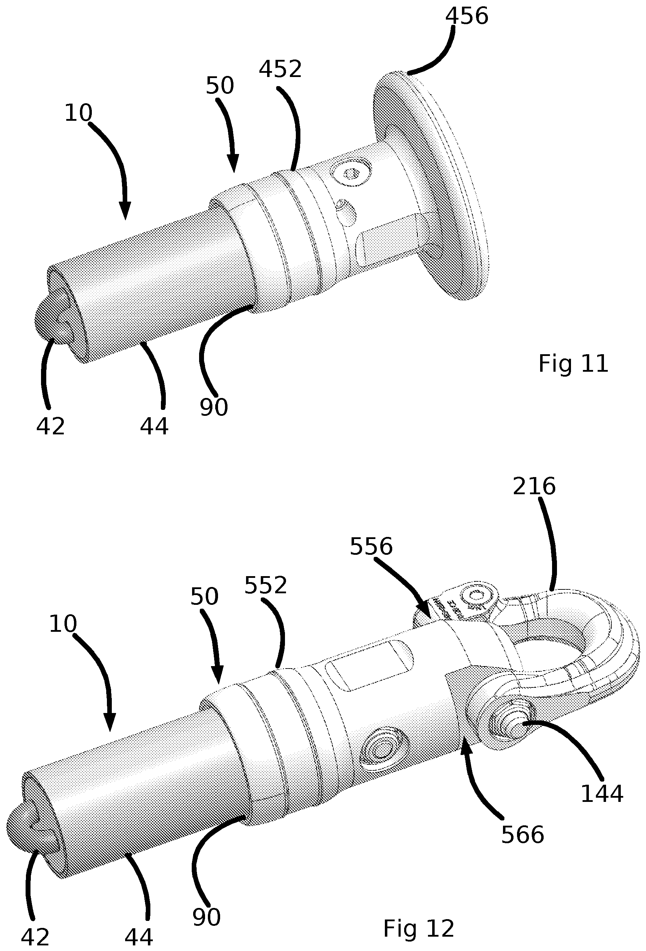

The embodiment of Figure 11 does not include a swivel and has a terminator body 452 that omits the first axial recess 72. The terminator body 452 is formed with a radially-projecting flange 456 at its axial end opposite the lanyard recess 90. The flange 456 serves as a blocker to prevent the terminated end of the lanyard 10 passing through an aperture, loop or rope adjuster, such as an eye at the end of a line or a chain link.

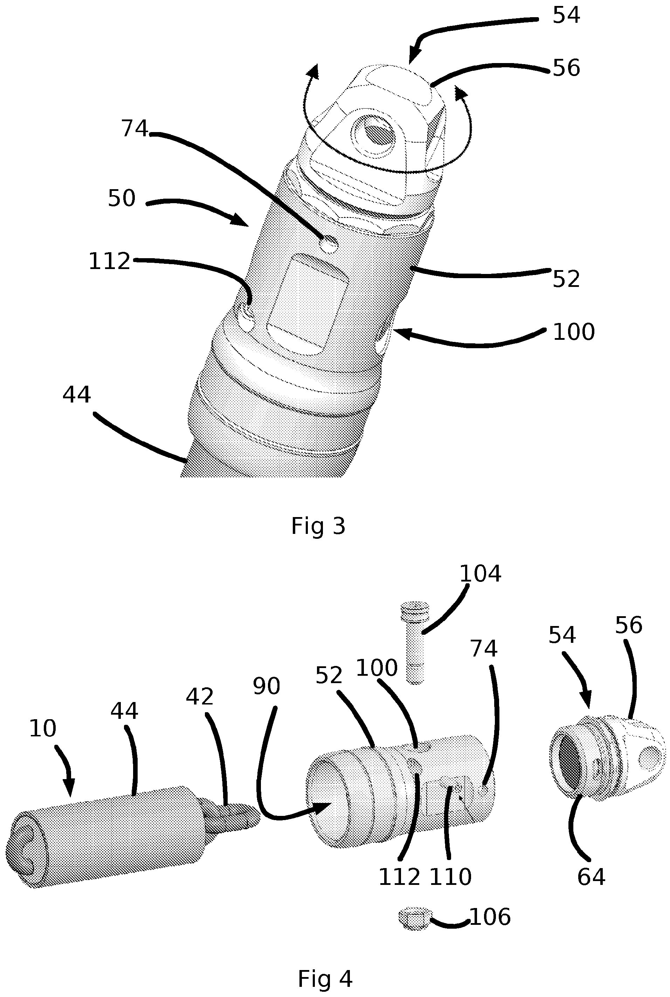

The embodiment of Figure 12 includes a shackle 216 that is substantially identical to that of Figure 9. However, in this case, the boss is not a separate component, but is constituted by an integrally-formed boss portion 556 of the terminator body 552. An axial end portion of the terminator body 552 opposite the lanyard recess 90 is formed with flat, parallel, opposite-facing mating surfaces 566 each of which extends in a respective plane parallel to a long axis of the terminator body 552 and an attachment bore that extends through the terminator body 556 between the mating surfaces 566. The shackle 216 is secured to the boss by an axle bolt 144. As with the embodiment of Figures 1 to 9, a wide range of alternative components and devices can be connected to the boss 556, and can pivot with respect to the lanyard 10 about the axle bolt 144.

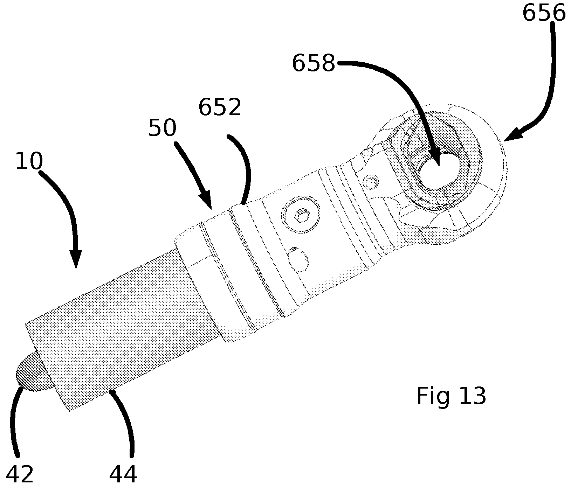

The embodiment of Figure 13 can be considered as a variation on that of Figure 11. Instead of having a flange, the terminator body 652 has an integrally-formed eye 656. The eye 656 has a through-hole 658 through which a line or connector can be passed to secure the lanyard 10.

## Claims

1. A lanyard assembly comprising:
a. an elongate lanyard (10) that includes a chain of multiple interconnected links (42), including an end link (42') that forms one end of the chain and a second link (42") immediately adjacent in the chain to the end link;
b. a terminator (50) that includes a terminator body (52);
c. the terminator body having a lanyard recess (90), in a floor of which a chain recess (94) is formed; within which at least the end link (42') is received;
d. a retainer (104) that passes through the end link (94') to prevent its removal from the chain recess (94); and
e. a connector element that can be connected to an object to effect connection of the lanyard assembly to that object, the connector element being connected to the terminator body (52) by a swivel (54);
**characterised in that** the chain includes a cover, whereby at least said end link of the chain projects from said cover.

2. A lanyard assembly according to claim 1 in which at least part of the second link (42") is received within the chain recess (94).

3. A lanyard assembly according to claim 1 or claim 2 in which the chain recess (94) has first and second extents (96, 98) within which the second link (42") and the end link (42') respectively are received.

4. A lanyard assembly according to any preceding claim in which the terminator body (52) includes a threaded recess (72) into which the connector swivel can be threaded.

5. A lanyard assembly according to any preceding claim in which the connection between the connector element and the terminator body (52) is independent of the connection between the chain and the terminator body.

6. A lanyard assembly according to any preceding claim in which the extents (96, 98) of the chain recess (94) are shaped and dimensioned to minimise movement of the links (42) received within them.

7. A lanyard assembly according to any preceding claim in which the entire length of the end link (42') is received within the second extent (98) of the chain recess (94).

8. A lanyard assembly according to any preceding claim in which approximately half the length of the second link (42") is received within the first extent (96) of the chain recess (94).

9. A lanyard assembly according to any preceding claim in which the chain includes a cover (44) for its links, at least the end link (42') projecting from the cover (44).

10. A lanyard assembly according to claim 9 in which an end portion of the cover (44) is received within the lanyard recess (90).

11. A lanyard assembly according to claim 10 in which an end surface of the cover (44) closely approaches or abuts the floor of the lanyard recess (90).

12. Apparatus for use by a person working at height comprising a harness and a lanyard assembly according to any preceding claim, the terminator (50) being connected to an attachment point (18) of the harness.

13. Apparatus according to claim 12 in which the lanyard assembly is in addition connected to a further attachment point of the harness through a second terminator.

14. Apparatus according to claim 12 or claim 13 in which the lanyard assembly is in addition connected to a further attachment point of the harness through a length adjuster (22).

## Patentansprüche

1. Eine Verbindungsband-Baugruppe, umfassend:
a. ein längliches Verbindungsband (10), das eine Kette aus mehreren miteinander verbundenen Gliedern (42) umfasst, umfassend ein Endglied (42'), das ein Ende der Kette bildet, und ein zweites Glied (42"), das in der Kette unmittelbar neben dem Endglied angeordnet ist;
b. ein Endstück (50), das einen Endstückkörper (52) umfasst;
c. wobei der Endstückkörper eine Verbindungsband-Aussparung (90) aufweist, in deren Boden eine Kettenaussparung (94) ausgebildet ist; in der zumindest das Endglied (42') aufgenommen ist;
d. eine Haltevorrichtung (104), die durch das Endglied (94') hindurchgeht, um dessen Entfernen aus der Kettenaussparung (94) zu verhindern; und
e. ein Verbindungselement, das mit einem Objekt verbunden werden kann, um die Verbindung der Verbindungsband-Baugruppe mit diesem Objekt herzustellen, wobei das Verbindungselement über ein Drehgelenk (54) mit dem Endstückkörper (52) verbunden ist;
**dadurch gekennzeichnet, dass** die Kette eine Abdeckung umfasst, wobei mindestens das Endglied der Kette aus der Abdeckung herausragt.

2. Eine Verbindungsband-Baugruppe gemäß Anspruch 1, bei der mindestens ein Teil des zweiten Glieds (42") in der Kettenaussparung (94) aufgenommen ist.

3. Eine Verbindungsband-Baugruppe gemäß Anspruch 1 oder Anspruch 2, bei der die Kettenaussparung (94) eine erste und eine zweite Ausdehnung (96, 98) aufweist, in denen das zweite Glied (42") bzw. das Endglied (42') aufgenommen sind.

4. Eine Verbindungsband-Baugruppe gemäß einem der vorstehenden Ansprüche, bei der der Endstückkörper (52) eine Gewindeaussparung (72) aufweist, in die das Verbindungsdrehgelenk eingeschraubt werden kann.

5. Eine Verbindungsband-Baugruppe gemäß einem der vorstehenden Ansprüche, bei der die Verbindung zwischen dem Verbindungselement und dem Endstückkörper (52) unabhängig von der Verbindung zwischen der Kette und dem Endstückkörper ist.

6. Eine Verbindungsband-Baugruppe gemäß einem der vorstehenden Ansprüche, bei der die Ausdehnungen (96, 98) der Kettenaussparung (94) geformt und dimensioniert sind, um die Bewegung der darin aufgenommenen Glieder (42) zu minimieren.

7. Eine Verbindungsband-Baugruppe gemäß einem der vorstehenden Ansprüche, bei der die gesamte Länge des Endglieds (42') innerhalb der zweiten Ausdehnung (98) der Kettenaussparung (94) aufgenommen ist.

8. Eine Verbindungsband-Baugruppe gemäß einem der vorstehenden Ansprüche, bei der etwa die Hälfte der Länge des zweiten Glieds (42") innerhalb der ersten Ausdehnung (96) der Kettenaussparung (94) aufgenommen ist.

9. Eine Verbindungsband-Baugruppe gemäß einem der vorstehenden Ansprüche, bei der die Kette eine Abdeckung (44) für ihre Glieder aufweist, wobei zumindest das Endglied (42') aus der Abdeckung (44) herausragt.

10. Eine Verbindungsband-Baugruppe gemäß Anspruch 9, bei der ein Endabschnitt der Abdeckung (44) in der Verbindungsband-Aussparung (90) aufgenommen ist.

11. Eine Verbindungsband-Baugruppe gemäß Anspruch 10, bei der eine Endfläche der Abdeckung (44) dicht an den Boden der Verbindungsband-Aussparung (90) heranreicht oder an diesem anliegt.

12. Vorrichtung zur Verwendung durch eine Person, die in der Höhe arbeitet, umfassend einen Auffanggurt und eine Verbindungsband-Baugruppe gemäß einem der vorstehenden Ansprüche, wobei das Endstück (50) mit einem Befestigungspunkt (18) des Auffanggurts verbunden ist.

13. Vorrichtung nach Anspruch 12, wobei die Verbindungsband-Baugruppe zusätzlich mit einem weiteren Befestigungspunkt des Auffanggurts über einen zweiten Endstück verbunden ist.

14. Vorrichtung nach Anspruch 12 oder Anspruch 13, wobei die Verbindungsband-Baugruppe zusätzlich mit einem weiteren Befestigungspunkt des Auffanggurts über einen Längenversteller (22) verbunden ist.

## Revendications

1. Ensemble de sangle comprenant :
a. un ensemble de sangle allongé (10) qui comporte une chaîne à maillons multiples (42) reliés entre eux, comportant un maillon d'extrémité (42') qui forme une première extrémité de la chaîne et un deuxième maillon (42") immédiatement adjacent au maillon d'extrémité sur la chaîne ;
b. un élément terminal (50) qui comporte un corps d'élément terminal (52) ;
c. le corps d'élément terminal comportant une cavité de sangle (90) sur une partie inférieure de laquelle une cavité de chaîne (94) est formée, à l'intérieur de laquelle au moins le maillon d'extrémité (42') est reçu ;
d. un élément de retenue (104) qui passe à travers le maillon d'extrémité (94') afin d'empêcher sa libération de la cavité de chaîne (94) ; et
e. un élément de couplage qui peut être couplé à un objet afin d'assurer le couplage de l'ensemble de sangle à cet objet, l'élément de couplage étant relié au corps d'élément terminal (52) par un pivot (54) ;
**caractérisé en ce que** la chaîne comporte une gaine telle qu'au moins ledit maillon d'extrémité de la chaîne s'étend à partir de ladite gaine.

2. Ensemble de sangle selon la revendication 1, dans lequel au moins une partie du deuxième maillon (42") est reçue à l'intérieur de la cavité de chaîne (94).

3. Ensemble de sangle selon la revendication 1 ou 2, dans lequel la cavité de chaîne (94) comporte des première et seconde extensions (96, 98) à l'intérieur desquelles le deuxième maillon (42") et le maillon d'extrémité (42') sont respectivement reçus.

4. Ensemble de sangle selon l'une quelconque des revendications précédentes, dans lequel le corps d'élément terminal (52) comporte une cavité filetée (72) dans laquelle le pivot d'élément de couplage peut être vissé.

5. Ensemble de sangle selon l'une quelconque des revendications précédentes, dans lequel le couplage entre l'élément de couplage et le corps d'élément terminal (52) est indépendant du couplage entre la chaîne et le corps d'élément terminal.

6. Ensemble de sangle selon l'une quelconque des revendications précédentes, dans lequel les extensions (96, 98) de la cavité de chaîne (94) sont formées et dimensionnées de manière à minimiser le mouvement des maillons (42) reçus à l'intérieur de ces dernières.

7. Ensemble de sangle selon l'une quelconque des revendications précédentes, dans lequel la totalité de la longueur du maillon d'extrémité (42') est reçue à l'intérieur de la seconde extension (98) de la cavité de chaîne (94).

8. Ensemble de sangle selon l'une quelconque des revendications précédentes, dans lequel approximativement la moitié de la longueur du deuxième maillon (42") est reçue à l'intérieur de la première extension (96) de la cavité de chaîne (94).

9. Ensemble de sangle selon l'une quelconque des revendications précédentes, dans lequel la chaîne comporte une gaine (44) pour ses maillons, au moins le maillon d'extrémité (42') s'étendant à partir de la gaine (44).

10. Ensemble de sangle selon la revendication 9, dans lequel une partie d'extrémité de la gaine (44) est reçue à l'intérieur de la cavité de sangle (90).

11. Ensemble de sangle selon la revendication 10, dans lequel une surface d'extrémité de la gaine (44) se rapproche étroitement ou vient en butée sur la partie inférieure de la cavité de sangle (90).

12. Dispositif destiné à être utilisé par une personne travaillant en hauteur comprenant un harnais et un ensemble de sangle selon l'une quelconque des revendications précédentes, l'élément terminal (50) étant couplé à un point d'attache (18) du harnais.

13. Dispositif selon la revendication 12, dans lequel l'ensemble de sangle est, en outre, couplé à un point d'attache supplémentaire du harnais par un second élément terminal.

14. Dispositif selon la revendication 12 ou 13, dans lequel l'ensemble de sangle est, en outre, couplé à un point d'attache supplémentaire du harnais par l'intermédiaire d'un élément de réglage de longueur (22).
